Europäisches Patentamt

European Patent Office

Office européen des brevets

(19)

(11) Publication number: **0 037 267**
**B1**

(12) **EUROPEAN PATENT SPECIFICATION**

(45) Date of publication of patent specification: **06.06.84**

(51) Int. Cl.³: **G 01 B 11/26, G 01 B 5/24**

(21) Application number: **81301338.0**

(22) Date of filing: **27.03.81**

(54) Vehicle frame and body alignment apparatus.

(30) Priority: **31.03.80 US 135867**

(43) Date of publication of application:
**07.10.81 Bulletin 81/40**

(45) Publication of the grant of the patent:
**06.06.84 Bulletin 84/23**

(84) Designated Contracting States:
**AT BE CH DE FR GB IT LI LU NL SE**

(56) References cited:
**DE - A - 2 642 228**
**US - A - 2 975 522**
**US - A - 3 786 572**
**US - A - 3 810 313**
**US - A - 4 015 339**
**US - A - 4 097 157**

(73) Proprietor: **KANSAS JACK, INC**
**1101 West First Street**
**McPherson Kansas 67460 (US)**

(72) Inventor: **Eck, Leonard F.**
**1101 West First Street**
**McPherson Kansas 67460 (US)**

(74) Representative: **Allen, William Guy Fairfax**
**J.A. KEMP & CO. 14 South Square Gray's Inn**
**London WC1R 5EU (GB)**

Courier Press, Leamington Spa, England.

## Description

The present invention relates to an apparatus for checking and measuring the geometric relationships of a vehicle frame and body.

The frame and body structure of a vehicle is constructed with respect to precise geometric relationships as determined by the manufacturer in order that the vehicle has proper driving and road holding properties as well as accurate exterior design measurement locations. Various apparatuses for effecting straightening of bent and damaged vehicle frame and body parts are known in the art as are known various gauges and rules for determining the amount of damage to the vehicle frame or body members. These alignment measurement apparatuses are often unduly complex and cumbersome and require long periods of familiarization and usage in order for a vehicle frame and body repairman to become proficient in their operation.

DE—A—2,642,228 discloses an alignment checking and measuring apparatus for vehicle frame and body portions, comprising a plurality of measurement scale carriers each comprising a rigid elongate bar having opposite end portions, a target mounted on at least one of the end portions of one of the bars, and a sighting instrument mounted on at least one of the end portions of another of the bars whereby the sighting instrument may be mounted in longitudinally spaced relation to the target mounted on another bar.

Patent Specifications US—A—4,015,339 (SAMEFA) and US—A—3,786,572 (LARSON) disclose automotive framework checking devices in which a bar incorporates means for attaching it to two spaced points of the vehicle body or frame, whereby the bar is carried by the frame.

The device disclosed in DE—A—2,642,228 has the disadvantage that it is unable to test for misalignment at different vertically spaced locations along the side of a vehicle to test for damage such as might have been caused by the vehicle rolling over or in severe collisions.

It is an object of the present invention to allow for such damage to be investigated.

Accordingly, the present invention is characterized by a plurality of mounting means movably mounted on the bars for translation thereon, said mounting means having outwardly extending connectors for detachably and adjustably mounting each said bar transversely of the longitudinal axis of the vehicle and on selected vehicle frame and body portions corresponding to vehicle measurement points; and by the fact that the target and the sighting instrument are detachably mounted on and adjustable along the end portions of the bars.

The sighting instrument may, for example, comprise a laser projector which is pivotally mounted so as to sweep a plane perpendicular to the measurement bar on which the laser is mounted.

It is also advantageous if the bars of the device in accordance with the present invention, carrying either the targets or the sighting instruments, are mountable at upper positions such as across the top of the bonnet or across the top of the boot of the vehicle. These advantages cannot be derived from the disclosure of DE—A—2,642,228.

Thus, the apparatus according to the present invention may be adaptable to various alignment operations and applications, and may be relatively inexpensive, sturdy and efficient to use.

In order that the invention will more readily be understood, the following description is given, merely by way of example, reference being made to the accompanying drawings, wherein:—

Figure 1 is a plan, diagrammatic view of a vehicle frame and body alignment apparatus embodying the present invention and shown in use with a vehicle;

Figures 2 and 3 are each a side elevational, diagrammatic view of the apparatus of Figure 1 and showing two methods of use thereof;

Figure 4 is a side elevation of a measurement scale carrier of the apparatus and showing vehicle mounting means and sighting instruments positioned thereon;

Figure 5 is a plan view of the parts illustrated in Figure 4;

Figures 6, 7 and 8 are side elevation, an end elevation and a bottom plan, respectively, of a sighting instrument and mounting means for positioning on the measurement scale carrier;

Figures 9 and 10 are an elevation and a plan view respectively, of the measurement scale carrier with vehicle mounting means and targets mounted on end portions thereof;

Figure 11 is a fragmentary view of a target and mounting means therefor positioned on the measurement scale carrier;

Figure 12 is a fragmentary side view of a first embodiment of a vehicle mounting means and positioned on a measurement scale carrier; and

Figures 13 and 14 are fragmentary end elevations of a second and a third embodiment respectively of a vehicle mounting means and positioned on the measurement scale carrier.

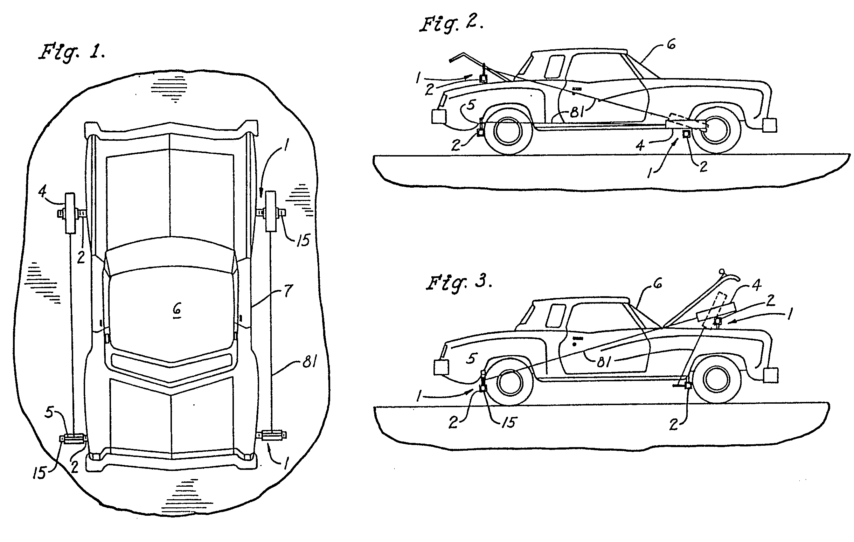

The checking and measuring apparatus 1 shown in Figures 1 to 5 includes one or more measurement scale carriers 2 mounted transversely of a vehicle 6 by vehicle mounting means 3 adjustably mounted adjacent opposite ends thereof. Selected carriers 2 support sighting instruments 4 which sight targets 5 mounted on other longitudinally displaced carriers 2.

In the illustrated example, the carrier 2 includes a rigid measurement bar 9 which is preferably non-circular in cross-section, such as square tubing having opposite side surfaces 10 and upper and lower surfaces 11. The measurement bar 9 has a scale 12 thereon which has a "Zero" mark at the midportion 14 of the bar 9 and is marked with numerically increasing indicia towards end portions 15, so that equal distances on the bar 9 from the midportion 14 can be readily determined.

Each vehicle mounting means 3 includes a connector 17 having first and second end portions 18 and 19 (Figures 12—14). The connector 17 is removably mounted on slide members 21 sleeved on the bar 9 and of a cross-sectional size to fit securely therearound. The slide member 21 has a wing bolt fastener 22 extending through a corner thereof and selectively contacting the surface of the bar 9 to enable the slide member 21 to be secured at a selected longitudinal position on bar 9. A socket 23 having an internal opening 24 extends upwardly from slide member 21 to receive the end portion 18 of the connector 17, the socket 23 and end portion 18 preferably having a circular cross-section enabling the connector 17 to swivel. A peripheral annular groove 26 in end portion 18 is engaged by a wing screw 27 threaded through socket 23, to secure connector 17 detachably thereto.

The connector 17 shown in Figure 12, is an aperture connector 28 and has spaced, spring-like fingers 29 and 30 connected by a thumb screw 31 selectively to draw together and to part the fingers 29 and 30. The second end portions 19 of the fingers 29 and 30 can be inserted into an aperture 34 of a vehicle frame member 35 and then spread by the thumb screw 31 so that grooves 32 therein engage the sides of the aperture 34 to affix the aperture connector 28 therein.

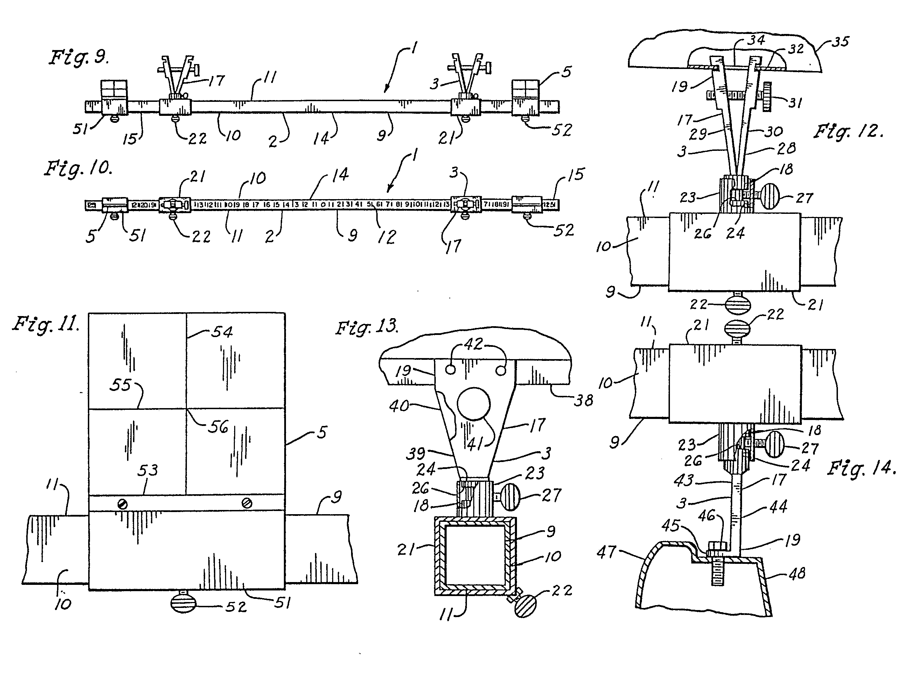

The connector 17 shown in Figure 13, is a flange connector 37 for attachment to vehicle body flanges 38 and has relatively broad, spaced, spring-like arms 39 and 40 connected by a thumb screw 41 for drawing the arms 39 and 40 apart and together. The second end portion 19 of the arms 39 and 40 is relatively broad and flattened and has pointed pins 42 extending through the outer portion of each arm 39 and 40 for point contact to bite into the surface of the flange 38, thereby supporting the measurement bar 9.

Yet another form of connector member 17, Figure 14, is a bolt connector 43 for connection to a body bolt position and has a single shaft 44 with the second end portion 19 forming an L-shaped foot 45 thereon. The foot 45 has a bore therethrough to accept a bolt 46 to extend therethrough and insert into a bolt hole at adjoining portions of the body, such as the juncture of an external fender 47 and internal engine compartment liner 48.

The aperture connector 28, flange connector 37 and bolt connector 43 are used as desired to either suspend the end portion 15 of the measurement scale carrier 2 thereform in hanging relation, Figures 2, 3, 12 and 13, or support the end portion 15 in superior spaced relation, Figures 2, 3, 12 and 13.

As shown in connection with Figures 1, 2, 3 and 11, certain measurement scale carriers 2 have targets 5 detachably and adjustably mounted thereon while others have sighting instruments 4 thereon. The targets 5 are mounted by a flange 53 upon slide members 51 of a cross-sectional size for securely sleeving over the bar 9 and having a wing screw 52 extending therethrough and selectively tightenable to secure the slide member 51 at a desired location on the bar 9. In the illustrated example, the target 5 is a planar member, square in configuration, and has vertical and horizontal indicia 54 and 55 crossing at a centre aiming point 56.

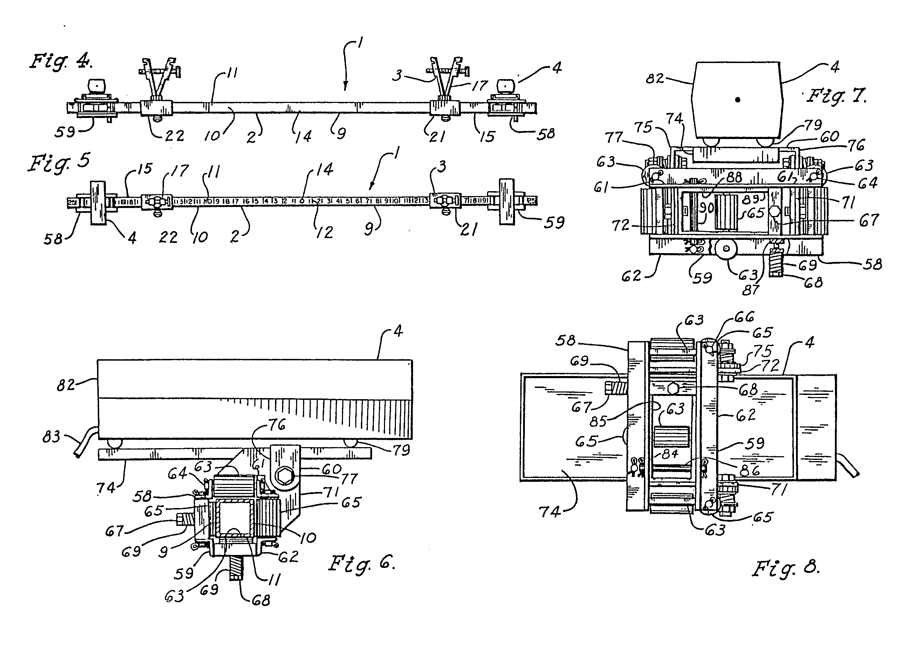

Interchangeable with the targets 5 on the end portions 15 of the measurement bars 9 are the sighting instruments 4, which are each supported by mounting means 58, Figures 4 to 8, including a movable carrier member 59 facilitating longitudinal translation on the measurement scale carrier 2. Further, pivot means 60 located between the carrier member 59 and the sighting instrument 4 permit the sighting instrument to be swung upwardly and downwardly and sweep a plane perpendicular to the axis of the measurement scale carrier 2.

In the illustrated example, the carrier member 59 has a rectangular frame work of spaced upper and lower frame members 61 and 62 supporting rollers 63 mounted on horizontal axis spindles 64. The upper and lower frame members 61 and 62 also support rollers 65 mounted on vertical axis spindles 66.

The lowermost horizontally extending roller 63 is supported by a vertically adjustable subframe assembly 84, Figure 8, including a rectangular frame 85, one end portion of which is pivotally connected to the frame members 62 by a pin 86. A vertical adjustment screw 68 extends through the other end portion of the frame 85 and connects to a crossbar 87 extending between the lower frame members 62. A coil spring 69 sleeved on the adjustment screw 68 maintains tension thereon.

Similarly, a forward vertically extending roller 65 is supported by a horizontally adjustable subframe assembly 88, Figure 7, including a rectangular frame 89 pivotally connected to the frame members 61 and 62 by a pin 90. A horizontal adjustment screw 67 extends through the other end portion of the frame 89 and connects to a crossbar (not shown) similar to the crossbar 87 and extending between the upper and lower frame members 61 and 62. A coil spring 69 sleeved on the adjustment screw 67 maintains tension thereon.

Through selective adjustment of the horizontal and vertical adjustment screws 67 and 68, the respective subframe assemblies 88 and 84 swing toward and away from the measurement scale carrier 2 to control freedom of sliding movement of the carrier member 59 thereon. Adjusting the subframe assemblies 88 and 84 into tighter or looser engagement with the surfaces 10 and 11 of the measurement scale carrier respectively restricts or increases freedom of translational movement and allows for easier translational movement.

L-shaped support arms 71 and 72 extend upwardly from the upper and lower frame members 61 and 62, a mounting base 74 being situated between the upper portions of the L-shaped arms. Ears 75 and 76 on base 74 are pivotally connected to the L-shaped support arms 71 and 72 by bolts 77 whereby the mounting base is swingable upwardly and downwardly to permit a sighting instrument thereon to sweep a plane perpendicular to the longitudinal axis of the measurement scale carrier 2.

The sighting instruments 4 are mounted on and affixed to the mounting base 74 by shock absorbent mountings 79 to isolate the sighting instrument 4 from minor shocks and vibrations which would otherwise adversely effect the instrument. The sighting instrument may be a telescope, light beam projector or the like and in the illustrated example, the sighting instrument 4 comprises a low power laser within a housing 82 having an electrical power line 83 extending thereinto. The laser can project a beam 81 of coherent, collimated radiation capable of great accuracy for alignment. The sighting instruments 4 are preferably sufficiently sensitive to minor misalignment angles to permit relatively precise alignment of the vehicle frame and body.

In use, a plurality of measurement scale carriers 2 are positioned transversely of the vehicle 6. Many applications for the checking and measuring apparatus 1 can be devised and in Figures 1, 2 and 3, several such examples are shown. Many types of body or frame damage can occur in a vehicle, such as twisting of the frame, thereby giving both a horizontal and vertical misalignment; parallelogram form deformation of the spaced frame main rails, thereby giving only horizontal misalignment; and major body area crushing, as from massive collisions and the like and providing damage with both horizontal and vertical components of misalignment.

In Figure 1, measurement scale carriers 2 are positioned beside the vehicle front and rear wheels and suspended from vehicle frame members by use of either the aperture connectors 28 or the flange connectors 37. The bar 9 is then translated through the tubular member 21 to position the Zero mark at the midportion 14 of the bar in centred relation to the vehicle. Several such measurement scale carriers 2 are connected to the vehicle and preferably placed both at positions where there appears to be no misalignment, thereby using these locations for reference, and positions where there is known damage or misalignment. On at least one of the measurement scale carriers 2, which may be positioned at either a damaged or reference position, sighting instruments 4 are mounted thereon by sleeving the carrier members 59 supporting the sighting instruments over the opposite bar end portions 15 and positioning the sighting instruments 4 at equal distances from the bar midportion 14, such as 89 cms (35 inches) therefrom. Alignment of the rear end of the vehicle is determined relative to the front end of the vehicle through the use of measurement scale carriers 2. Preferably, the measurement scale carriers 2 are positioned at manufacturer's specified locations for which measurements and angles to other specified locations or points are listed. A second measurement scale carrier 2 having the targets 5 mounted thereon is connected to the vehicle in spaced relation to the scale carrier 2 having the sighting instruments 4 thereon. The targets 5 are preferably positioned equidistantly from the midportion 14 of the second bar.

Using the sighting instrument 4, a beam 81 is projected toward a generally longitudinally aligned associated target 5 and the target 5 is translated along the measurement scale carrier 2 until the line of sight 81 impinges upon the centre aiming point 56 thereof. The operator then directs his attention to the other side of the vehicle 6 and projects a beam 81 toward the generally longitudinally aligned associated target 5 and translated the rear target 5 along the measurement scale carrier 2 until the beam 81 thereof impinges upon the target centre aiming point 56. The indica on the measurement scale carrier 2 are noted, for example, 89 cm (35 inches) left and 89 cm (35 inches) right and the distance between the connectors or vehicle mounting means 3 and the tagets 5 noted. The distance should be the same on both sides of the vehicle 6 and, if not, one side is misshapen relative to the other side. Appropriate corrective measures can then be accomplished to make a pull, push, or the like and remove the damage. While the vehicle is undergoing corrective operations, the measuring scale carrier 2 can remain attached thereto and the wing screws 22 on the slide members 21 can be loosened to accommodate the changes in distance as the damage is removed.

As illustrated in Figure 2, a measurement scale carrier 2 is mounted immediately behind the vehicle front wheels and carriers a sighting instrument 4 thereon to direct a beam 81 at a second measurement scale carrier 2 located left of the vehicle rear wheels. A third measurement scale carrier 2 is situated transversely of the boot opening to measure any damage in that area and supported by flange connectors 37 attached to a flange 38 (Figure 13) extending around the lip or rim of the open boot. The flange connectors 37, in this example, act as standards supporting the measurement scale carrier. Sighting instruments 4 at the front end of the vehicle 6 project beams 81 onto targets 5 positioned at the rear of the vehicle 6. Body damage in the region of the vehicle boot can be determined and measured by noting the distance between the vehicle mounting means 3 and the target 5 at one side of the vehicle relative to the distance therebetween at the other side of the vehicle.

The sighting elements 4 can be used either to project beams toward damaged or misaligned areas or to receive beams therefrom.

In Figure 3, a first measurement scale carrier 2 is shown mounted on the MacPherson strut towers of the vehicle 6, by bolt connectors 43 as shown in Figure 14, and projecting beams 81 toward a second measurement scale carrier 2 situated behind the vehicle rear wheels and a third measurement scale carrier 2 situated behind the vehicle front wheels. Each sighting instrument 4 is oriented to project beams 81 toward a target 5 at one side of the rear mounted measurement scale carrier 2 and the sighting instruments 4 are translated on the bar 9 until the beams 81 impinge upon the centre aiming point 56 of each target 5. The sighting procedure is repeated for the opposite side 7 of the vehicle 6 and the distances between the vehicle mounting means 3 and the sighting instruments 4 on each side of the strut tower mounted measurement scale carrier 2 are noted to provide an indication of misalignment at either the location of the first or of the second measurement scale carrier 2. If collision damage is apparent at one of the two locations, it follows that the misalignment would be at that location. The ability of the pivot 60 to permit the sighting instrument 4 to sweep a vertical plane allows the sighting instrument to project a beam 81 toward the measurement scale carrier 2 mounted thereunder and behind of the vehicle front wheels. To facilitate this use, the targets 5 thereof are removed from the end portions 14 of the bar 9 and, rotated 90 degrees and replaced on the bar so that the target extends horizontally to receive the beam 81 on the centre aiming point 56. The differences in symmetry of respective sides of the vehicle can be thereby noted.

Other uses of the alignment and checking and measuring apparatus 1 will become apparent from the foregoing disclosure. The measuring scale carrier 2 can even be attached adjacent the rear end of the vehicle 6 and the sighting instruments 4 mounted thereon to project beams to the vehicle front wheels and check for camber, caster, toe-in and other front wheel alignment measurements (not shown).

**Claims**

1. An alignment checking and measuring apparatus for vehicle frame and body portions comprising: a plurality of measurement scale carriers (2) each comprising a rigid elongate bar (9) having opposite end portions (15); a target (5) mounted on at least one of the end portions of one of the bars; and a sighting instrument (4) mounted on at least one of the end portions of another of the bars, whereby the sighting instrument (4) may be mounted in longitudinally spaced relationship to the target (5) mounted on another bar (9); characterised by a plurality of mounting means (3) movably mounted on the bars (9) for translation thereon, said mounting means (3) having outwardly extending connectors (17) for detachably and adjustably mounting each said bar (9) transversely of the longitudinal axis of the vehicle (6) and on selected vehicle frame and body portions corresponding to vehicle measurement points; and by the fact that the target (5) and the sighting instrument (4) are detachably mounted on and adjustable along the end portions (15) of the bars (9).

2. Apparatus according to Claim 1, characterised in that the mounting means (3) include slide members (21) sleeved onto the bars (9) and translatable thereon and fasteners (22) on the slide members to enable said slide members to be secured to the bars (9) in a selected position.

3. Apparatus according to Claim 2, characterised in that the slide members (21) have sockets (23) mounted thereon and receiving a first end (18) of one of said connectors (17) therein, and in that said socket has a fastener (27) for releasably retaining the first end (18) of the connector within said socket and permitting pivotal movement thereof.

4. Apparatus according to Claim 1, 2 or 3, characterised in that at least one of said connectors (17) includes spaced fingers (29, 30) for insertion into an aperture (34) at one of said measurement points in said vehicle and in that said fingers have a threaded fastener (31) extended therethrough and selectively rotatable to draw said fingers together for insertion into said aperture and urge said fingers apart for engagement with the sides of said aperture.

5. Apparatus according to any preceding claim, characterised in that at least one of said connectors (17) includes spaced arms (39, 40) forming a clamp for engagement with a flange (38) at one of said measurement points in said vehicle, and in that said arms have a threaded fastener (41) extended therethrough and selectively rotatable to draw said fingers together and clamp about said flange.

6. Apparatus according to any preceding claim, characterised in that said target (5) includes a slide member (51) sleeved about the associated bar (9) and translatable thereon and a planar member extending outwardly from said slide member, said planar member having target indicia (54—56).

7. Apparatus according to any preceding claim, characterised in that said sighting instrument (4) is mounted on a carrier member (59) facilitating translation thereof on one of said end portions and in that a pivotal connector (71—77) is provided between said carrier member (59) and said sighting instrument (4) which permits said sighting instrument to swing upwardly and downwardly and sweep a plane perpendicular to said bar (9).

8. Apparatus according to claim 7, characterised in that said carrier member (59) has rollers (63, 65) mounted for rotation thereon, said rollers being in rolling contact with the side surfaces (10) and upper and lower surfaces (11) of the bar (9).

9. Apparatus according to any preceding claim, characterised in that said sighting instrument (4) includes a laser device (82) for emitting a coherent collimated light beam (81).

10. Apparatus according to any preceding claim, characterised in that each elongate, rigid bar (9) has scale indicia (12) marked along substantially the length thereof.

**Patentansprüche**

1. Ausrichtungs-Prüf- und Meßeinrichtung für Fahrzeugrahmen und Fahrzeugkarosserieteile mit einer Mehrzahl von Meßskalenträgern (2), von denen jeder einen festen länglichen Stab (9) mit entgegengesetzten Endteilen (15), eine an mindestens einer der Endteile einer der Stäbe befestigte Zielscheibe (5), und einem an mindestens einem der Endteile eines anderen der Stäbe befestigten Zielinstruments (4), wobei das Zielinstrument (4) in longitudinal entfernter Beziehung zu der auf einem anderen Stab (9) befestigten Zielscheibe (5) montiert sein kann, gekennzeichnet durch eine Mehrzahl von beweglich zur Translation darauf auf den Stäben (9) montierten Befestigungseinrichtungen (3), wobei die befestigungseinrichtungen (3) nach außen sich erstreckende Verbindungsstücke (17) zum lösbaren und einstellbaren Befestigen jedes Stabes (9) transversal der longitudinalen Achse des Fahrzeuges (6) und an ausgewählten Fahrzeugrahmen und Karosserieteilen, die Fahrzeugmeßpunkten entsprechen, und durch die Tatsache, daß die Zielscheibe (5) und das Zielinstrument (4) lösbar befestigt und einstellbar auf und entlang den Endteilen (15) der Stäbe (9) sind.

2. Einrichtung nach Anspruch 1, dadurch gekennzeichnet, daß die Befestigungseinrichtungen (3) auf die Stäbe (9) geschobene und darauf translatorsich bewegliche Gleitelemente (21) und Verschlußteile (22) an den Gleitelementen, damit die Gleitelemente mit den Stäben (9) in einer ausgewählten Position gesichert werden können, aufweisen.

3. Einrichtung nach Anspruch 2, dadurch gekennzeichnet, daß die Gleitelemente (21) Buchsen (23) haben, die darauf montiert sind und ein erstes Ende (18) eines der Verbindungsstücke (17) aufnehmen, und dadurch, daß die Buchse ein Verschlußteil (27) zum lösbaren Festhalten des ersten Endes (18) des Verbindungsteiles mit der Buchse hat und eine Drehbewegung davon ermöglicht.

4. Einrichtung nach Anspruch 1, 2 oder 3, dadurch gekennzeichnet, daß mindestens eines der Verbindungsteile (17) voneinander entfernte Finger (29, 30) zur Einfügung in eine Öffnung (34) an einem der Meßpunkte im Fahrzeug hat, und dadurch, daß diese Finger ein Verschlußteil mit Gewinde (31) haben, das sich durch sie erstreckt und selektiv drehbar ist um diese Finger zusammenzuziehen zur Einfügung in die Öffnung und diese Finger auseinanderzuzwingen zum Eingriff mit den Seiten der Öffnung.

5. Einrichtung nach einem der vorhergehenden Ansprüche, dadurch gekennzeichnet, daß mindestens einer der Verschlußstücke (17) voneinander entfernte Arme (39, 40) aufweist, die eine Klemme zum Eingriff mit einem Flansch (38) an einem der Meßpunkte im Fahrzeug bilden, und daß diese Arme ein Verschlußteil mit Gewinde (41) haben, das sich durch sie hindurcherstreckt und selektiv drehbar ist um die Finger zusammenzuziehen und sie um den Flansch zu klammern.

6. Einrichtung nach einem der vorhergehenden Ansprüche, dadurch gekennzeichnet, daß die Zielscheibe (5) ein auf den zugehörigen Stab (9) geschobenes und darauf translatorisch bewegbares Gleitelement (51) und ein planares sich von dem Gleitelement nach außen erstreckendes Element aufweist, wobei das planare Element Target Indizes (54—56) hat.

7. Einrichtung nach einem der vorhergehenden Ansprüche, dadurch gekennzeichnet, daß die Zieleinrichtung (4) auf einem Tragelement (59), das ihre translatorische Bewegung auf einem der Endteile ermöglicht, montiert ist und dadurch, daß ein Dreh-Verbindungsteil (71—77) zwischen dem Tragelement (59) und dem Zielinstrument (4) vorgesehen ist, welches dem Zielinstrument erlaubt, auf und ab zu schwingen und eine Ebene perpendikular zu dem Stab (9) zu überstreichen.

8. Einrichtung nach Anspruch 7, dadurch gekennzeichnet, daß das Tragelement (59) zur Rotation darauf befestigte Walzen (63, 65) hat, wobei die Walzen im Rollkontakt mit den Seitenflächen (10) und oberen und unteren Oberflächen (11) des Stabes (9) sind.

9. Einrichtung nach einem der vorhergehenden Ansprüche, dadurch gekennzeichnet, daß das Zielinstrument (4) eine Lasereinrichtung (82) zum Emittieren eines kohärenten kollimierten Lichtbündels (81) aufweist.

10. Einrichtung nach einem der vorhergehenden Ansprüche, dadurch gekennzeichnet, daß jeder längliche, feste Stab (9) Skalenindizes (12) hat, die im wesentlichen entlang seiner Länge markiert sind.

**Revendications**

1. Appareil de contrôle et de mesure d'alignement pour parties du châssis et de la caisse d'un véhicule, comprenant: plusieurs porte-échelle de mesure (2) comprenant chacun une barre allongée rigide (9) ayant des parties terminales opposées (15); une cible (5) montée sur au moins une des parties terminales de l'une des barres; et un instrument de visée (4) monté sur au moins une des parties terminales d'une autre des barres, de telle sorte que l'instrument de visée 4 puisse être monté à une certaine distance longitudinale de la cible (5) qui est montée sur une autre barre (9); caractérisé par plusieurs moyens de montage (3) qui sont montés mobiles sur les barres (9) en vue d'une translation sur celles-ci, lesdits moyens de montage (3) comportant des connecteurs (17) dirigés vers l'extérieur pour monter, de manière détachable et réglable, chacune desdites barres (9) transversalement à l'axe longitudinal du véhicule (6) et sur des parties choisies du châssis et de la caisse du véhicule correspondant à des points de mesure de véhicule; et par le fait que la cible (5) et l'instrument de visée (4) sont montés de manière détachable sur les parties terminales (15) des barres (9) et réglables le long de celles-ci.

2. Appareil selon la revendication 1, caractérisé en ce que les moyens de montage (3) comportent des coulisseaux (21) manchonnés sur les barres (9) et pouvant glisser le long de celles-ci, et des éléments de fixation (22) sur les coulisseaux pour permettre auxdits coulisseaux d'être fixés sur les barres (9) dans une position choisie.

3. Appareil sleon la revendication 2, caractérisé en ce que sur les coulisseaux (21) sont montées des douilles (23) recevant une première extrémité (18) de l'un desdits connecteurs (17), et en ce que ladite douille comporte un élément de fixation (27) pour maintenir de manière amovible la première extrémité (18) du connecteur à l'intérieur de ladite douille et permettre son pivotement.

4. Appareil selon la revendication 1, 2 ou 3, caractérisé en ce qu'au moins un desdits connecteurs (17) comporte des doigts espacés (29, 30) destinés à être enfilés dans une ouverture (34) en l'un desdits points de mesure dudit véhicule, et en ce que lesdits doigts comportent un organe de fixation fileté (31) qui les traverse et que l'on peut faire tourner sélectivement pour rapprocher lesdits doigts et les enfiler dans ladite ouverture, et écarter lesdits doigts et les faire s'appliquer contre les côtés de ladite ouverture.

5. Appareil selon l'une quelconque des revendications précédentes, caractérisé en ce qu'au moins un desdits connecteurs (17) comporte des bras espacés (39, 40) formant une pince destinée à s'engager sur un rebord (38) en l'un desdits points de mesure dudit véhicule, et en ce que lesdits bras comportent un organe de fixation fileté (41) qui les traverse et que l'on peut faire tourner sélectivement pour rapprocher lesdits doigts et les faire se refermer sur ledit rebord.

6. Appareil selon l'une quelconque des revendications précédentes, caractérisé en ce que ladite cible (5) comporte un coulisseau (51) manchonné sur la barre correspondante (9) et pouvant glisser sur celle-ci, et un élément plan faisant saillie dudit coulisseau, ledit élément plan comportant des repères de cible (54—56).

7. Appareil selon l'une quelconque des revendications précédentes, caractérisé en ce que ledit instrument de visée (4) est monté sur un élément de support (59) facilitant sa translaton sur l'une desdites parties terminales, et en ce qu'un connecteur à pivot (71—77) est prévu entre ledit élément de support (59) et ledit instrument de visée (4) et permet audit instrument de visée d'osciller de bas en haut et de haut en bas et de balayer un plan perpendiculaire à ladite barre (9).

8. Appareil selon la revendication 7, caractérisé en ce que sur ledit élément de support (59) sont montés des galets (63—65) destinés à tourner sur lui, lesdits galets étant en contact roulant avec les surfaces latérales (10) et avec les surfaces supérieure et inférieure (11) de la barre (9).

9. Appareil selon l'une quelconque des revendications précédentes, caractérisé en ce que ledit instrument de visée (4) comporte un dispositif à laser (82) pour émettre un faisceau de lumière collimatée cohérente (81).

10. Appareil selon l'une quelconque des revendications précédentes, caractérisé en ce que chaque barre rigide allongée (9) porte des graduations (12) marquées sensiblement suivant sa longueur.

*Fig. 1.*

*Fig. 2.*

*Fig. 3.*

0 037 267

Fig. 4.

Fig. 5.

Fig. 6.

Fig. 7.

Fig. 8.

0 037 267

Fig. 9.

Fig. 10.

Fig. 11.

Fig. 12.

Fig. 13.

Fig. 14.

0 037 267